# EUROPÄISCHE PATENTSCHRIFT

(11) **EP 3 168 657 B1**
(45) Veröffentlichungstag und Bekanntmachung des Hinweises auf die Patenterteilung: **01.01.2020**
(21) Anmeldenummer: 16198483.6
(22) Anmeldetag: 11.11.2016
(51) Int. Cl.: F21S 43/239, F21S 43/241, F21S 43/243, F21S 43/247, F21S 43/31, G02B 3/00, G02B 3/08, F21V 8/00, G02B 19/00, F21V 5/04, F21V 7/00, F21Y 115/10

(54) **VORSATZOPTIK UND VORSATZOPTIKANORDNUNG MIT MEHREREN VORSATZOPTIKEN**
ATTACHMENT LENS AND ATTACHMENT LENS ASSEMBLY WITH MULTIPLE ATTACHMENT LENSES
OPTIQUE AUXILIAIRE ET SYSTÈME D'OPTIQUE AUXILIAIRE COMPRENANT PLUSIEURS OPTIQUES AUXILIAIRES

(30) Priorität: 13.11.2015 DE 102015222495
(43) Veröffentlichungstag der Anmeldung: 17.05.2017
(73) Patentinhaber: Automotive Lighting Reutlingen GmbH, 72762 Reutlingen (DE)
(72) Erfinder: GEBAUER, Matthias, 72770 Reutlingen (DE)
(74) Vertreter: DREISS Patentanwälte PartG mbB

(56) Entgegenhaltungen:
- DE-A1-102007 063 569
- DE-U1-202013 101 509
- US-A1- 2007 121 331
- US-A1- 2011 255 290
- US-A1- 2012 320 580

## Beschreibung

Die vorliegende Erfindung betrifft eine Vorsatzoptik aus einem transparenten Material zum Bündeln von Licht einer Lichtquelle. Die Vorsatzoptik weist eine Lichteintrittsfläche, über die von der Lichtquelle ausgesandtes Licht in die Vorsatzoptik eintritt, und eine Lichtaustrittsfläche auf, über die gebündeltes Licht aus der Vorsatzoptik austritt. Ferner weist die Vorsatzoptik eine Längsachse auf, die durch die Lichteintrittsfläche und die Lichtaustrittsfläche verläuft und auf der die Lichtquelle in einem ersten Brennpunkt angeordnet ist.

Des Weiteren betrifft die vorliegende Erfindung eine Vorsatzoptikanordnung mit mehreren Vorsatzoptiken der genannten Art.

Derartige Vorsatzoptiken sind aus dem Stand der Technik, bspw. der US 2012/0320580 A1, der DE 10 2010 013 931 A1 oder der US 2014/0029284 A1 bekannt. Meistens sind die Vorsatzoptiken vor Leuchtdioden (LEDs) sehr kompakt gebaut und beleuchten dadurch in der Breite und/oder der Höhe nur sehr kleine Lichtaustrittsflächen. Die bekannten Vorsatzoptiken besitzen auf der Einkoppelseite eine Vertiefung, in oder vor der die Lichtquelle angeordnet ist. Am Boden der Vertiefung ist eine erste zentrale Einkoppelfläche in Form einer Sammellinse mit einem ersten Brennpunkt ausgebildet. Eine seitliche Wandung der Vertiefung, welche den Boden umgibt, bildet einen äußeren Bereich der Lichteintrittsfläche weist eine zweite ringförmige Einkoppelfläche mit einer Flächenerstreckung in etwa parallel zu einer optischen Achse der Vorsatzoptik auf. Die zweite Einkoppelfläche schließt sich an die erste Einkoppelfläche an. An der zweiten Einkoppelfläche werden Strahlen gebrochen. In der Vorsatzoptik ist ein Reflektor angeordnet, der mit Totalreflexion (TIR) arbeitet, um die eingekoppelten Lichtstrahlen in ähnliche Richtungen umzulenken, die auch die durch die zentrale Linse passierenden Strahlen haben.

Wenn man die an der zweiten ringförmigen Einkoppelfläche gebrochenen Lichtstrahlen zu ihrem Ursprung zurückverfolgt, haben diese normalerweise keinen gemeinsamen Schnittpunkt.

Der vorliegenden Erfindung liegt die Aufgabe zugrunde, bei ähnlicher Tiefe der Vorsatzoptik eine einfache Einkoppeloptik bzw. Lichteintrittsfläche einer Einkoppeloptik vorzuschlagen, deren ausgeleuchtete Fläche zumindest in einer der X- bzw. Y- Dimensionen eine große Erstreckung aufweist, also eine relativ große Fläche ausleuchten kann. Dies ist wünschenswert, da viele Scheinwerfer, Rücklichter und Seitenlichter Leuchten mit einer lang gestreckten Kontur besitzen. Dabei soll nach Möglichkeit die gesamte Lichtaustrittsfläche bzw. Kontur der Optik möglichst homogen ausgeleuchtet werden.

Zur Lösung dieser Aufgabe wird ausgehend von der Vorsatzoptik der eingangs genannten Art vorgeschlagen, dass die Lichteintrittsfläche einen ersten zentralen Bereich und einen zweiten, neben dem zentralen Bereich angeordneten Bereich unterteilt ist, wobei der zweite Bereich derart ausgebildet ist, dass sich von der Lichtquelle ausgesandte Lichtstrahlen nach einem Durchtritt durch den zweiten Bereich und einer Brechung an dem zweiten Bereich in einem virtuellen zweiten Brennpunkt schneiden, und dass der erste zentrale Bereich derart ausgebildet ist, dass sich von der Lichtquelle ausgesandte Lichtstrahlen nach einem Durchtritt durch den ersten Bereich und einer Brechung an dem ersten Bereich in einem virtuellen dritten Brennpunkt schneiden, wobei der zweite Brennpunkt zwischen dem ersten Brennpunkt und dem dritten Brennpunkt angeordnet ist.

Erfindungsgemäß wird vorgeschlagen, dass die Strahlen im zentralen Bereich nicht parallelisiert werden, sondern noch etwas auseinander laufen, um einen größeren Bereich der Lichtaustrittsfläche auszuleuchten. Der äußere Seitenbereich der Lichteintrittsfläche muss somit weiter nach außen verschoben werden. Der zentrale Bereich der Lichteintrittsfläche ist vorzugsweise nicht als eine Sammellinse ausgebildet.

In dem ersten zentralen Bereich der Lichteintrittsfläche wird durch Brechung aus dem Licht von dem ersten Brennpunkt ein Lichtbündel erzeugt, das sich so verhält, als würde es von dem virtuellen dritten Brennpunkt kommen. Die seitlichen Außenbereiche der Lichteintrittsfläche erzeugen ebenfalls durch Brechung aus dem Lichtbündel von dem ersten Brennpunkt ein Lichtbündel, das sich so verhält, als würde es von dem zweiten Brennpunkt kommen. Die Lichtstrahlen dieses Lichtbündels können dann im weiteren Strahlengang in der Vorsatzoptik z.B. mit einer parabolischen Spiegelfläche oder mit einer totalreflektierenden seitlichen Grenzfläche der Vorsatzoptik parallelisiert und zur Lichtaustrittsfläche umgelenkt werden. Die Strahlen von dem zentralen inneren Bereich der Lichteintrittsfläche können z.B. beim Austritt aus der Vorsatzoptik durch eine zweite Linse oder eine Fresnellinse oder durch eine Lochlinse parallelisiert werden.

Gemäß einer vorteilhaften Weiterbildung der Erfindung wird vorgeschlagen, dass der erste zentrale Bereich und der zweite Bereich jeweils symmetrisch zu der Längsachse gewölbt sind. Vorteilhafterweise sind der zweite Brennpunkt und der dritte Brennpunkt auf der Längsachse der Vorsatzoptik angeordnet. Der erste zentrale Bereich ist vorzugsweise konvex gewölbt, und der zweite Bereich ist vorzugsweise konkav gewölbt. Der erste zentrale Bereich kann dabei krümmungsstetig oder verrundet in den zweiten Bereich übergehen. Es ist aber auch denkbar, dass zwischen den Bereichen eine Kante als Übergang ausgebildet ist. Besonders bevorzugt entspricht die Längsachse einer optischen Achse der Vorsatzoptik.

Erfindungsgemäß wird vorgeschlagen, dass die Vorsatzoptik eine plattenförmige Ausdehnung aufweist. Gemäß einer besonders bevorzugten Ausführungsform der Erfindung wird vorgeschlagen, dass die Lichteintrittsfläche auf einer ersten Schmalseite und die Lichtaustrittsfläche auf einer zweiten, der ersten Schmalseite gegenüber liegenden Schmalseite der plattenförmigen Vorsatzoptik ausgebildet ist. Die Längsachse oder optische Achse verläuft somit durch die Lichteintritts- und die Lichtaustrittsflächen. Die Längsachse erstreckt sich vorzugsweise in Z-Richtung. Die Lichteintritts- und Lichtaustrittsflächen liegen somit in einer XY-Ebene, die senkrecht zur Z-Richtung verläuft. Die Lichteintritts- aber vor allem die Lichtaustrittsfläche der Vorsatzoptik hat eine wesentlich größere Erstreckung in X-Richtung (Breite) als in Y-Richtung (Höhe). Selbstverständlich kann die Erfindung aber auch dazu genutzt werden, eine senkrecht stehende schmale Lichtaustrittsfläche besonders homogen auszuleuchten. Bei diesem Ausführungsbeispiel sind die seitlichen Bereiche der Lichteintrittsfläche vorzugsweise auf zwei gegenüberliegenden Seiten des zentralen Bereichs ausgebildet. Oberhalb und unterhalb des zentralen Bereichs sind somit keine den seitlichen Bereichen entsprechend geformte Bereiche der Lichteintrittsfläche ausgebildet.

Vorteilhafterweise sind zwei zwischen der Lichteintrittsfläche und der Lichtaustrittsfläche ausgebildete gegenüberliegende Schmalseiten der plattenförmigen Vorsatzoptik in einem Längsschnitt entlang der Längsachse und parallel zu einer Flächenerstreckung der Vorsatzoptik (XZ-Ebene) parabelförmig ausgebildet, wobei die Längsachse eine Parabelachse der beiden parabelförmigen Schmalseiten bildet. Die beiden parabelförmigen Schmalseiten bilden Reflexions- oder Grenzflächen, die auftreffendes Licht durch Totalreflexion (TIR) reflektieren. In einer Schnittebene parallel zur XY-Ebene können die parabelförmigen Schmalseiten gerade oder gewölbt, vorzugsweise konkav gewölbt, ausgebildet sein.

Gemäß einer bevorzugten Ausführungsform wird vorgeschlagen, dass die Lichtaustrittsfläche zumindest in einer Ebene eine Wellenstruktur aufweist. Besonders bevorzugt weist die Lichtaustrittsfläche in zwei senkrecht zueinander stehenden Ebenen sich überlagernde Wellenstrukturen auf, so dass sich an der Lichtaustrittsfläche eine Vielzahl von Kissenoptiken ergibt. Die Wellenstrukturen haben vorzugsweise die gleiche Wellenlänge und/oder die gleiche Amplitude. Zusätzlich oder alternativ können auch andere optisch wirksame Elemente, bspw. in Form von Zylinderlinsen o.ä., auf der Lichtaustrittsfläche ausgebildet sein. Die Zylinderachsen der Zylinderlinsen verlaufen vorzugsweise parallel zueinander. Durch die optisch wirksamen Elemente auf der Lichtaustrittsfläche kann das hindurchtretende Licht eine zusätzliche Streuung in gewünschter Weise erfahren.

Die der vorliegenden Erfindung zugrundeliegende Aufgabe wird auch durch eine Vorsatzoptikanordnung gelöst, die mehrere erfindungsgemäße Vorsatzoptiken umfasst, wobei die Längsachsen der Vorsatzoptiken deckungsgleich sind und die Vorsatzoptiken um die gemeinsamen Längsachsen um mehrere Winkelgrade versetzt zueinander angeordnet sind. Die einzelnen Vorsatzoptiken sind also um die Z-Achse oder optische Achse relativ zueinander gedreht. An den Übergängen zwischen nebeneinander angeordneten Vorsatzoptiken können die Übergänge verrundet werden.

Gemäß einer vorteilhaften Weiterbildung wird vorgeschlagen, dass die Vorsatzoptikanordnung vier Vorsatzoptiken mit jeweils einer Längsachse umfasst, wobei die Längsachsen deckungsgleich zueinander verlaufen. Die einzelnen Vorsatzoptiken sind um die gemeinsamen Längsachsen jeweils um 45° versetzt zueinander angeordnet. Wenn die einzelnen Vorsatzoptiken plattenförmig ausgebildet sind, weist die resultierende Lichtaustrittsfläche der Vorsatzoptikanordnung eine Art Sternform auf. Durch eine solche Vorsatzoptikanordnung lässt sich eine LED-Leuchte realisieren, die bspw. als Tagfahrlicht oder Blinklicht eingesetzt werden kann. Auch andere Leuchtenfunktionen können dadurch in besonders vorteilhafter Weise realisiert werden.

Weitere Merkmale und Vorteile der vorliegenden Erfindung werden nachfolgend anhand der Figuren näher erläutert. Es zeigen:
- Fig. 1a: eine Draufsicht auf eine aus dem Stand der Technik bekannte Vorsatzoptik mit ersten eingezeichneten imaginären Strahlverläufen;
- Fig. 1b: eine Draufsicht auf eine aus dem Stand der Technik bekannte Vorsatzoptik mit zweiten eingezeichneten imaginären Strahlverläufen;
- Fig. 2: eine Draufsicht auf eine erfindungsgemäße Vorsatzoptik in einer bevorzugten Ausführungsform;
- Fig. 3: einen Ausschnitt der Lichteintrittsfläche der Vorsatzoptik aus Fig. 2 in einer bevorzugten Ausführungsform;
- Fig. 4a: eine Draufsicht auf die aus dem Stand der Technik bekannte Vorsatzoptik nach Fig. 1a und 1b;
- Fig. 4b: eine Draufsicht auf die erfindungsgemäße Vorsatzoptik nach Fig. 2;
- Fig. 5a: eine perspektivische Ansicht auf die erfindungsgemäße Vorsatzoptik nach Fig. 2 und 4b;
- Fig. 5b: eine perspektivische Ansicht auf eine erfindungsgemäße Vorsatzoptikanordnung gemäß einer bevorzugten Ausführungsform;
- Fig. 6a: eine perspektivische Ansicht auf eine erfindungsgemäße Vorsatzoptik in einer anderen bevorzugten Ausführungsform;
- Fig. 6b: eine Seitenansicht auf die Vorsatzoptik gemäß Fig. 6a;
- Fig. 7a: eine perspektivische Ansicht auf eine Vorsatzoptik;
- Fig. 7b: eine Seitenansicht auf die Vorsatzoptik gemäß Fig. 7a;
- Fig. 8: eine mit einer erfindungsgemäßen Vorsatzoptikanordnung gemäß Fig.5b erzielbare Lichtstärkeverteilung; und
- Fig. 9: eine Seitenansicht auf eine Vorsatzoptik.

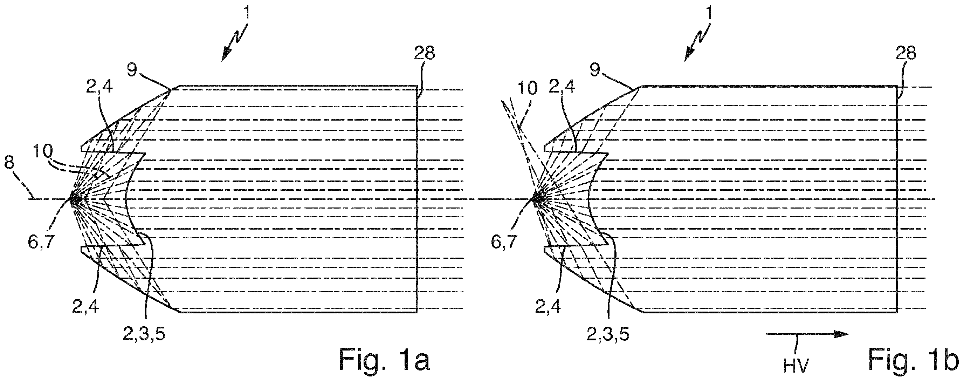

Die Figuren 1a und 1b zeigen eine aus dem Stand der Technik bekannte Vorsatzoptik 1 aus einem transparenten Material bspw. Glas oder Kunststoff, die auf ihrer Lichteintritts- oder Einkoppelseite eine Vertiefung aufweist. Eine Lichteintrittsfläche 2 der Vorsatzoptik 1 wird durch eine ersten Einkoppelfläche 3 in einem zentralen Bereich am Boden der Vertiefung und eine zweite ringförmige Einkoppelfläche 4 an einer seitlichen Wandung der Vertiefung, welche den Boden umgibt, gebildet. Die erste Einkoppelfläche 3 umfasst eine Sammellinse 5 mit einem Brennpunkt 6, in dem eine Lichtquelle 7 zum Aussenden von Lichtstrahlen angeordnet ist. Die zweite Einkoppelfläche 4 schließt sich an die erste Einkoppelfläche 3 an und erstreckt sich ringförmig und mit einer Fläche in etwa parallel zu einer optischen Achse 8 der Vorsatzoptik 1. Die über die erste Einkoppelfläche 3 in die Vorsatzoptik 1 eintretenden Strahlen werden von der Sammellinse 5 gebrochen, so dass diese nach dem Durchtritt durch die Vorsatzoptik 1 im Wesentlichen parallel zur optischen Achse 8 aus der Vorsatzoptik 1 austreten. An der zweiten Einkoppelfläche 4 werden die auftreffenden Strahlen gebrochen und von mindestens einer in der Vorsatzoptik 1 angeordneten Reflexionsfläche 9 reflektiert. Die Reflexionsfläche 9 wird durch Grenzflächen der Vorsatzoptik 1 gebildet und arbeitet mit Totalreflexion (TIR).

Die eingekoppelten Lichtstrahlen werden an der Fläche 3 derart gebrochen, dass sie nach der Reflexion an der Reflexionsfläche 9 und nach dem Durchtritt durch die Vorsatzoptik 1 im Wesentlichen parallel zu den die Sammellinse 5 passierenden Strahlen aus der Vorsatzoptik 1 austreten. Verfolgt man die an der zweiten ringförmigen Einkoppelfläche 4 gebrochenen Lichtstrahlen anhand der eingezeichneten imaginären Strahlverläufen 10 (Fig. 1a und 1b) zu ihrem Ursprung zurück, fällt auf, dass diese Lichtstrahlen keinen gemeinsamen Schnittpunkt haben (Fig. 1b) bzw. dass die Schnittpunkte von einander entsprechenden zurückverfolgten Strahlen 10 von gegenüberliegenden Abschnitten der zweiten Einkoppelfläche 4 entlang der optischen Achse 8 zwischen dem Brennpunkt 6 und der Sammellinse 5 verteilt angeordnet sind.

Bekannte Vorsatzoptiken 1 sind in der Regel sehr kompakt gebaut und beleuchten dadurch in der Breite und/oder der Höhe nur eine sehr kleine Auskoppel- oder Lichtaustrittsfläche 28 der Vorsatzoptik 1.

Um eine in einer X- und/oder Y-Dimension größere Fläche auszuleuchten, wird deshalb gemäß der Erfindung eine völlig neuartige Vorsatzoptik 11 vorgeschlagen, wie sie bspw. in

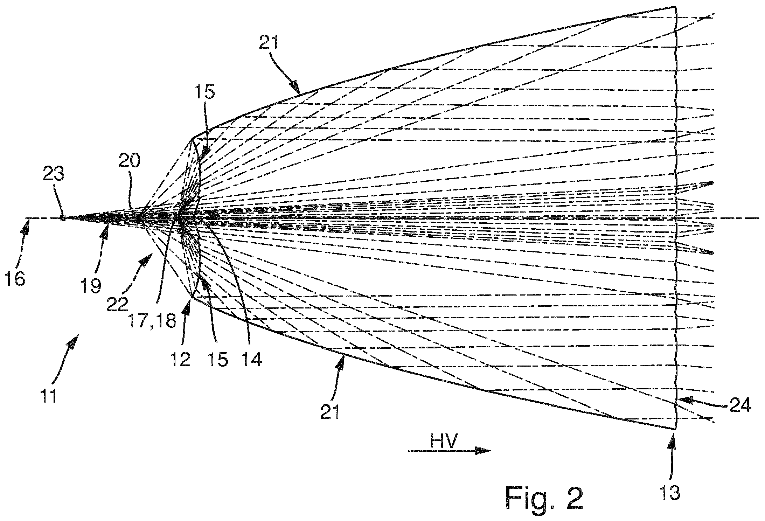

Fig. 2 gezeigt ist. Die erfindungsgemäße Vorsatzoptik 11 unterscheidet sich vom Stand der Technik insbesondere durch eine besondere Ausgestaltung der Lichteintrittsfläche 12 sowie der Lichtaustrittsfläche 13. Entscheidend ist, dass die spezielle Formgebung der Lichteintrittsfläche 12 wahlweise in Kombination mit einer entsprechenden Ausgestaltung der Lichtaustrittsfläche 13 eine besonders großflächige Ausleuchtung der erfindungsgemäßen Vorsatzoptik 11 in einer X- bzw. Y-Richtung gewährleistet. Dabei soll nach Möglichkeit die gesamte Kontur der Lichtaustrittsfläche 13 möglichst homogen ausgeleuchtet werden.

Figur 2 zeigt eine Draufsicht auf eine erfindungsgemäße Vorsatzoptik 11 mit einer Lichteintrittsfläche 12, die einen ersten zentralen Bereich 14, der sich um eine Längsachse 16 erstreckt, und einen außerhalb dieses zentralen Bereichs 14 angeordneten zweiten Bereich 15 aufweist. Der erste zentrale Bereich 14 ist konvex der zweite Bereich 15 konkav gewölbt. Auf der durch die Lichteintrittsfläche 12 verlaufenden Längsachse 16, die bspw. einer optischen Achse der Vorsatzoptik 11 entspricht, ist in einem ersten Brennpunkt 17 eine Lichtquelle 18 zum Aussenden von Lichtstrahlen angeordnet.

Die auf den zweiten Bereich 15 der Lichteintrittsfläche 12 auftreffenden Strahlen werden von diesem derart gebrochen, dass sie in der Vorsatzoptik 11 - obwohl sie ein wenig gebündelt werden - in Richtung der Lichtaustrittsfläche 13 weiterhin divergierend verlaufen. Die über den zweiten Bereich 15 eingekoppelten Lichtstrahlen treffen auf eine Reflexionsfläche 21 und werden von dieser in Richtung der Lichtaustrittsfläche 13 umgelenkt. Die Reflexionsflächen 21 reflektieren das Licht mittels Totalreflexion (TIR). Verfolgt man die durch den zweiten Bereich 15 der Lichteintrittsfläche 12 gebrochenen Strahlen anhand der eingezeichneten imaginären Strahlverläufen 22 zu ihrem Ursprung zurück, haben diese einen gemeinsamen Schnittpunkt in einem zweiten Brennpunkt 20, der vorzugsweise auf der Längsachse 16 liegt.

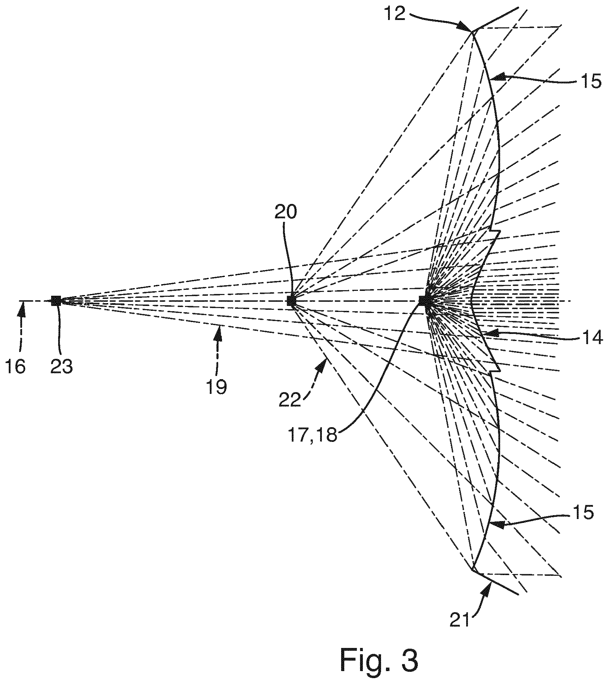

Die auf den ersten zentralen Bereich 14 der Lichteintrittsfläche 12 auftreffenden Strahlen werden von diesem derart gebrochen, dass sie in der Vorsatzoptik 11 nicht parallelisiert sind, sondern - obwohl sie ein wenig gebündelt werden - in Richtung der Lichtaustrittsfläche 13 weiterhin divergierend verlaufen. Verfolgt man die am ersten zentralen Bereich 14 der Lichteintrittsfläche 12 gebrochenen Strahlen anhand der eingezeichneten imaginären Strahlverläufen 19 zu ihrem Ursprung zurück, haben diese einen gemeinsamen Schnittpunkt in einem dritten Brennpunkt 23, der vorzugsweise ebenfalls auf der Längsachse 16 liegt (vgl. Fig. 3). Es ist deutlich zu erkennen, dass _-Gegenstand zum Stand der Technik - der erste Brennpunkt 17, in dem sich die Lichtquelle 18 befindet, beabstandet zu dem dritten Brennpunkt 23 angeordnet ist. Ferner liegt der zweite Brennpunkt 20 vorzugsweise zwischen dem ersten Brennpunkt 17, in dem die Lichtquelle 18 angeordnet ist, und dem dritten Brennpunkt 23.

An der Lichtaustrittsfläche 13 weist die erfindungsgemäße Vorsatzoptik 11 in zwei senkrecht zueinander stehenden Ebenen sich überlagernde Wellenstrukturen auf, so dass sich an der Lichtaustrittsfläche 13 eine Vielzahl von Kissenoptiken 24 ergibt. Die Wellenstrukturen haben vorzugsweise die gleichen Wellenlängen und die gleichen Amplituden. Durch die Kissenoptiken 24 erfährt das hindurchtretende Licht eine zusätzliche Streuung in gewünschter Weise. Selbstverständlich können auf der Lichtaustrittsfläche 13 zur Streuung des hindurchtretenden Lichts auch andere optisch wirksame Elemente ausgebildet sein, bspw. Zylinderlinsen oder Prismen.

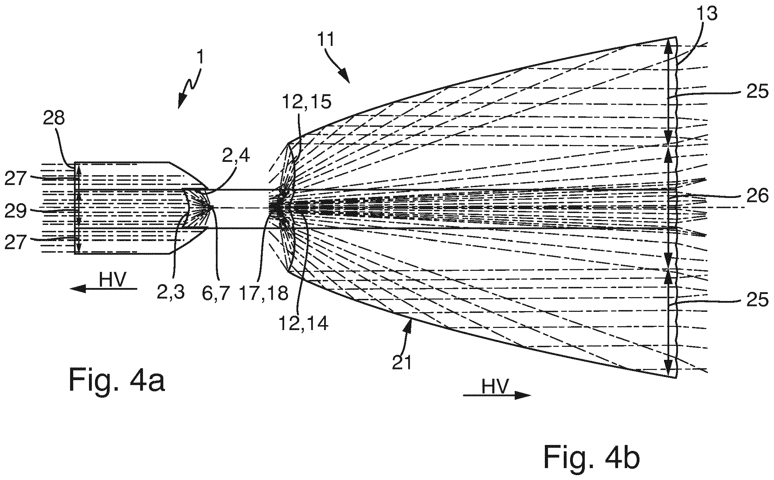

In Figur 4a ist eine aus dem Stand der Technik bekannte Vorsatzoptik 1 gemäß Fig. 1a gezeigt. Ein äußerer Bereich 27 der Lichtauskoppelfläche 28 wird von Strahlen beleuchtet, die die zweite Lichteinkoppelfläche 4 durchtreten, und ein innerer Bereich 29 der Lichtauskoppelfläche 28 von Strahlen, die die erste Lichteinkoppelfläche 3 durchtreten. Die Richtung der Lichtstrahlen verläuft in Fig. 4a von rechts nach links.

In Figur 4b ist im Vergleich dazu eine Draufsicht auf eine erfindungsgemäße Vorsatzoptik 11 gemäß Fig. 2 samt beispielhafter Ausleuchtung der Lichtaustrittsfläche 13 dargestellt, wobei hier die Richtung der Lichtstrahlen von links nach rechts verläuft. Ein äußerer Bereich 25 der Lichtaustrittsfläche 13 wird von den zweiten Bereich 15 der Lichteintrittsfläche 12 durchtretenden Strahlen und ein innerer, zentraler Bereich 26 der Lichtaustrittsfläche 13 von den ersten zentralen Bereich 14 der Lichteintrittsfläche 12 durchtretenden Strahlen beleuchtet. Die Abmessungen des ersten zentralen Bereichs 14 der Vorsatzoptik 11 und die erste Einkoppelfläche 3 der bekannten Vorsatzoptik 1 und die jeweiligen Brennweiten der Vorsatzoptiken 1, 11 aus Fig. 4a und 4b sind vergleichbar. Die erfindungsgemäße Vorsatzoptik 11 aus Fig. 4b weist eine Lichtaustrittsfläche 13 mit einem deutlich größeren äußeren Bereich 25 und einem deutlich größeren inneren Bereich 26 auf als die bekannte Vorsatzoptik 1 aus Fig. 4a.

Die erfindungsgemäße Vorsatzoptik 11 kann in einer Ebene quer zur Längsachse 16 eine Lichtaustrittsfläche 13 mit einer flächigen oder einer länglichen Erstreckung aufweisen. Bei einer flächigen Erstreckung kann die Lichtaustrittsfläche 13 die Form eines Kreises, einer Ellipse, eines Quadrats, eines Rechtsecks oder eines beliebigen Mehrecks, evtl. mit abgerundeten Ecken, aufweisen. In diesem Fall umgibt der äußere zweite Bereich 15 der Lichteintrittsfläche 12 den zentralen ersten Bereich 14 über seinen gesamten Umfang ringförmig. Bei einer länglichen Erstreckung der Lichtaustrittsfläche 13 mit einer großen Breite und einer im Vergleich dazu sehr geringen Höhe ist es denkbar, dass sich der zentrale erste Bereich 14 über die gesamte Höhe erstreckt und der äußere zweite Bereich 15 nur in der Breite neben dem ersten Bereich 14 angeordnet ist.

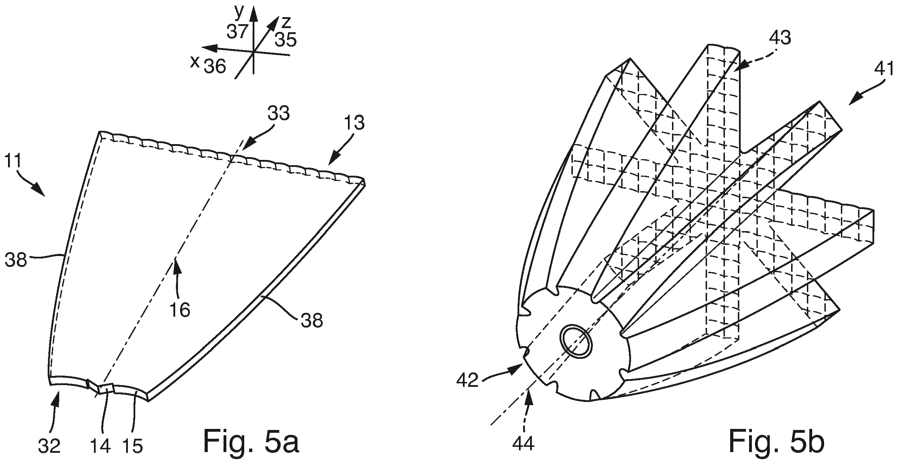

Um eine möglichst langgestreckte Lichtaustrittsfläche 13 zu erreichen, weist die Vorsatzoptik 11 eine plattenförmige Ausdehnung auf, wie sie bspw. in Fig. 5a dargestellt ist, wobei die Lichteintrittsfläche 12 auf einer ersten Schmalseite 32 und die Lichtaustrittsfläche 13 auf einer zweiten, der ersten Schmalseite 32 gegenüber liegenden Schmalseite 33 der plattenförmigen Vorsatzoptik 11 ausgebildet ist. Die Lichteintrittsfläche 12 aber vor allem die Lichtaustrittsfläche 13 der Vorsatzoptik 11 hat eine wesentlich größere Erstreckung in einer X-Richtung (Breite) 36 als einer in Y-Richtung (Höhe) 37. Die Längsachse 16 erstreckt sich in einer Z-Richtung 35 und verläuft durch die Lichteintritts- und die Lichtaustrittsflächen 12, 13. Die Lichteintritts- und Lichtaustrittsflächen 12, 13 liegen somit in einer XY-Ebene, die senkrecht zur Z-Richtung verläuft.

Die erfindungsgemäße Vorsatzoptik 11 weist zwei sich zwischen der Lichteintrittsfläche 12 und der Lichtaustrittsfläche 13 an gegenüberliegenden Längsseiten ausgebildete Reflexionsflächen 38 auf. Die Reflexionsflächen 38 sind in einem Längsschnitt entlang der Längsachse 16 und parallel zu einer Flächenerstreckung der Vorsatzoptik 11 (XZ-Ebene) vorzugsweise parabelförmig ausgebildet, wobei die Längsachse 16 eine Parabelachse der beiden parabelförmigen Reflexionsflächen 38 bildet. An den Reflexionsflächen 38 auftreffende Lichtstrahlen werden durch Totalreflexion (TIR) reflektiert und zur Lichtaustrittsfläche 13 umgelenkt. In einer Schnittebene parallel zur XY-Ebene können die parabelförmigen Schmalseiten 38 gerade oder gewölbt, vorzugsweise konkav gewölbt, ausgebildet sein.

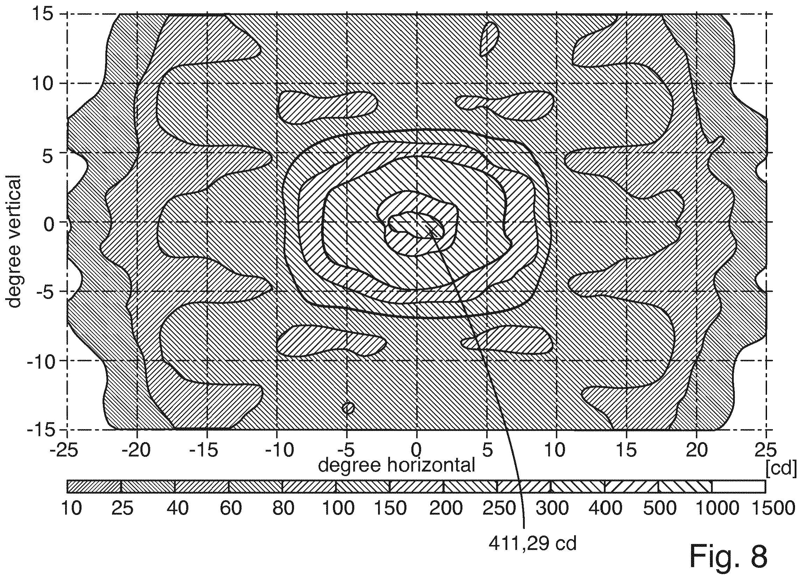

Figur 5b zeigt eine perspektivische Ansicht einer erfindungsgemäßen Vorsatzoptikanordnung 41 in einer bevorzugten Ausführungsform. Die Vorsatzoptikanordnung 41 umfasst vier jeweils um eine gemeinsame Längsachse 44 um 45° versetzt zueinander angeordnete erfindungsgemäße Vorsatzoptiken 11, wie sie bspw. in Fig. 5a dargestellt ist. Dabei überlagern sich die Längsachsen 16 der Vorsatzoptiken 11 und bilden die gemeinsame Längsachse 44. Die Kanten zwischen den einzelnen Vorsatzoptiken 11 sind verrundet, um die Herstellung der Vorsatzoptikanordnung 41 zu erleichtern. Eine Lichtaustrittsfläche 43 wird durch die Lichtaustrittflächen 13 der einzelnen Vorsatzoptiken 11 gebildet und erstreckt sich rotationssymmetrisch um die Längsachse 44. Eine Lichteintrittsfläche 42 der Vorsatzoptikanordnung 41 setzt sich zusammen aus den Eintrittsflächen 12 der vier Vorsatzoptiken 11. Figur 8 zeigt ein Beispiel für eine mit einer erfindungsgemäßen Vorsatzoptikanordnung 41 nach Fig. 5b erzielbare Lichtverteilung.

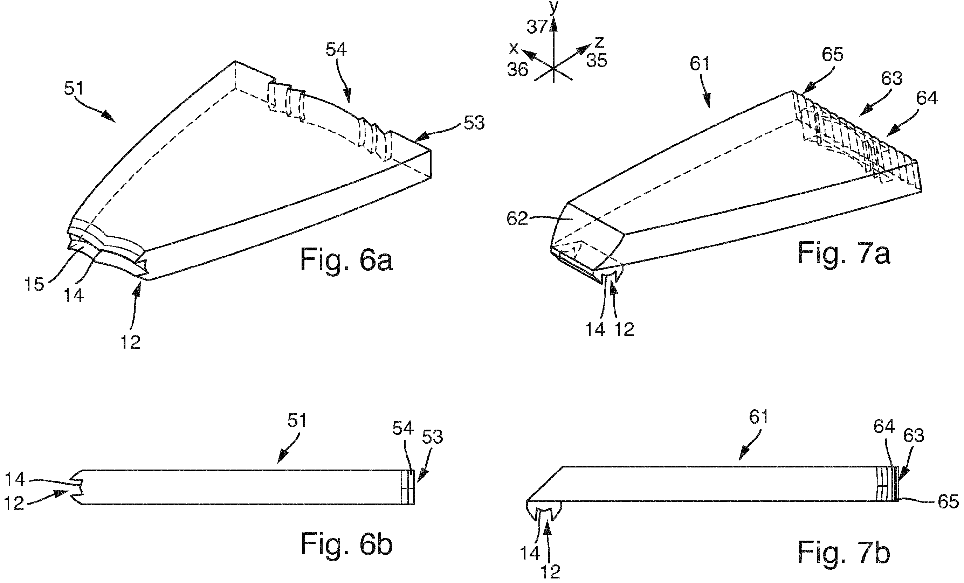

Figur 6a zeigt eine perspektivische Ansicht auf eine erfindungsgemäße Vorsatzoptik 51 in einer anderen bevorzugten Ausführungsform. Die erfindungsgemäße Vorsatzoptik 11 aus Fig. 2 ist in der Y-Richtung 37 mit einem Standard-Einkoppelprofil 2 nach Fig. 1a und 1b extrudiert. Eine Lichteintrittsfläche 12 umfasst somit in der XZ-Ebene ein Einkoppelprofil 2 nach Fig. 2 und in der XY-Ebene ein Einkoppelprofil 2 nach Fig. 1a und 1b. Die Lichtstrahlen werden in der YZ-Ebene parallelisiert und in der XZ-Ebene auf die gesamte Breite der in X-Richtung 36 langgestreckten Lichtaustrittsfläche 53 aufgeweitet. Um eine gewünschte Lichtverteilung zu erreichen, weist die erfindungsgemäße Vorsatzoptik 51 an der Lichtaustrittsfläche 53 eine sich in der XZ-Ebene erstreckende Fresneloptikstruktur 54 auf. Figur 6b zeigt eine Seitenansicht auf die Vorsatzoptik 51 aus Fig. 6a. Figur 7a zeigt eine perspektivische Ansicht auf eine Vorsatzoptik 61. Bei der mit einem Standard-Einkoppelprofil 2 extrudierten Vorsatzoptik 51 (vgl. Fig. 6a) ist die Lichteintrittsfläche 12 bezüglich der Längsachse 16 bzw. der Lichtaustrittsfläche 63 um eine in X-Richtung 36 verlaufende imaginäre Achse nach unten geklappt worden. In dem dargestellten Beispiel steht die Lichteintrittsfläche 12 mit ihrer Flächenerstreckung in etwa senkrecht zu der Flächenerstreckung der Lichtaustrittsfläche 63. Selbstverständlich ist es denkbar, dass die Flächen 12, 13 auch in einem beliebig anderen Winkel zueinander angeordnet sind. Besonders bevorzugt sind dabei Winkel in einem Bereich von 45° bis 135°. Die durch die Eintrittsfläche 12 eingekoppelten Lichtstrahlen fallen in der Vorsatzoptik 61 auf eine Reflexionsfläche 62, welche die Strahlen in Richtung der Lichtaustrittsfläche 63 umlenkt. Die Reflexionsfläche 62 kann eben oder in der YZ-Ebene und/oder in der XZ-Ebene eine Krümmung aufweisen. Um eine gewünschte Lichtverteilung zu erreichen, weist die Vorsatzoptik 61 an der Lichtaustrittsfläche 63 eine sich in der XZ-Ebene erstreckende Fresneloptikstruktur 64 auf. Diese kann durch eine sich ebenfalls XZ-Ebene erstreckende Wellenstruktur 65 überlagert sein. Figur 7b zeigt eine Seitenansicht auf die Vorsatzoptik 61 aus Fig. 7a.

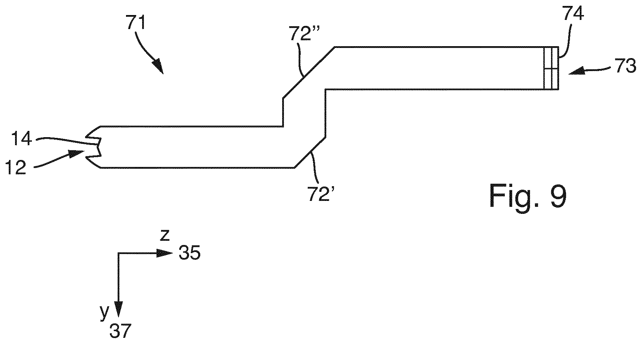

Es ist auch denkbar, dass die Vorsatzoptik 61 nicht nur - wie in Fig. 7a dargestellt - einmal, sondern mehrmals geknickt ist (vgl. Fig. 9). Figur 9 zeigt eine Seitenansicht einer Vorsatzoptik 71, die zwischen Lichteintritts- und Lichtaustrittsfläche zweifach jeweils um etwa 90° abgeknickt ist. Dabei ist jedem Knick eine Reflexionsfläche 72', 72" zum Umlenken der Lichtstrahlen zugeordnet. Die Lichtaustrittsfläche ist mit 73 bezeichnet, die Fresnellstruktur auf der Austrittsfläche mit 74.

Die vorliegende Erfindung ermöglicht es, insbesondere mittels einer besonderen Ausgestaltung der Lichteintrittsfläche 12, 42, in mindestens einer der X-bzw. Y-Dimensionen eine relativ große Ausdehnung der ausgeleichteten Lichtaustrittsfläche 13, 43, 53, zu erzielen.

## Patentansprüche

1. Vorsatzoptik (11; 51) aus einem transparenten Material zum Bündeln von Licht einer Lichtquelle (18), wobei die Vorsatzoptik (11; 51) eine Lichteintrittsfläche (12), über die von der Lichtquelle (18) ausgesandtes Licht in die Vorsatzoptik (11; 51) eintritt, und eine Lichtaustrittsfläche (13, 43, 53) aufweist, und die Vorsatzoptik (11; 51) eine Längsachse (16) aufweist, die durch die Lichteintrittsfläche (12) und die Lichtaustrittsfläche (13, 43, 53) verläuft und auf der die Lichtquelle (18) in einem ersten Brennpunkt (17) angeordnet ist, wobei die Lichteintrittsfläche (12) einen ersten zentralen Bereich (14) und einen zweiten, neben dem ersten Bereich (14) angeordneten Bereich (15) unterteilt ist, wobei der zweite Bereich (15) derart ausgebildet ist, dass sich von der Lichtquelle (18) ausgesandte Lichtstrahlen nach einem Durchtritt durch den zweiten Bereich (15) und einer Brechung an dem zweiten Bereich (15) in einem virtuellen zweiten Brennpunkt (20) schneiden, und dass der erste zentrale Bereich (14) derart ausgebildet ist, dass sich von der Lichtquelle (18) ausgesandte Lichtstrahlen nach einem Durchtritt durch den ersten Bereich (14) und einer Brechung an dem ersten Bereich (14) in einem virtuellen dritten Brennpunkt (23) schneiden, **dadurch gekennzeichnet, dass** über die Lichtaustrittsfläche (13, 43, 53) gebündeltes Licht aus der Vorsatzoptik (11; 51) austritt, dass die Vorsatzoptik (11; 51) eine plattenförmige Ausdehnung aufweist und dass der zweite Brennpunkt (20) zwischen dem ersten Brennpunkt (17) und dem dritten Brennpunkt (23) angeordnet ist.

2. Vorsatzoptik (11; 51) nach Anspruch 1, **dadurch gekennzeichnet, dass** der erste zentrale Bereich (14) und der zweite Bereich (15) jeweils symmetrisch zu der Längsachse (16) gewölbt sind.

3. Vorsatzoptik (11; 51) nach Anspruch 2, **dadurch gekennzeichnet, dass** der zweite Brennpunkt (20) und der dritte Brennpunkt (23) auf der Längsachse (16) der Vorsatzoptik (11; 51) angeordnet sind.

4. Vorsatzoptik (11; 51) nach einem der Ansprüche 1 bis 3, **dadurch gekennzeichnet, dass** der erste zentrale Bereich (14) konvex gewölbt ist.

5. Vorsatzoptik (11; 51) nach einem der Ansprüche 1 bis 4, **dadurch gekennzeichnet, dass** der zweite Bereich (15) konkav gewölbt ist.

6. Vorsatzoptik (11; 51) nach einem der Ansprüche 1 bis 5, **dadurch gekennzeichnet, dass** die Längsachse (16) eine optische Achse der Vorsatzoptik (11; 51) ist.

7. Vorsatzoptik (11; 51) nach einem der Ansprüche 1 bis 6, **dadurch gekennzeichnet, dass** zwei zwischen der Lichteintrittsfläche (12) und der Lichtaustrittsfläche (13, 43, 53) ausgebildete gegenüberliegende Schmalseiten (38) der plattenförmigen Vorsatzoptik (11; 51) in einem Längsschnitt entlang der Längsachse (16) und parallel zu einer Flächenerstreckung der Vorsatzoptik (11; 51) parabelförmig ausgebildet sind, wobei die Längsachse (16) eine Parabelachse der beiden parabelförmigen Schmalseiten (38) bildet.

8. Vorsatzoptik (11; 51) nach einem der Ansprüche 1 bis 7, **dadurch gekennzeichnet, dass** die Lichtaustrittsfläche (13, 43, 53) zumindest in einer Ebene eine Wellenstruktur aufweist.

9. Vorsatzoptik (11; 51) nach Anspruch 8, **dadurch gekennzeichnet, dass** die Lichtaustrittsfläche (13, 43, 53) in zwei senkrecht zueinander stehenden Ebenen sich überlagernde Wellenstrukturen aufweist.

10. Vorsatzoptikanordnung (41) umfassend mehrere Vorsatzoptiken (11; 51) nach einem der vorangehenden Ansprüche, wobei die Längsachsen (16) der Vorsatzoptiken (11; 51) deckungsgleich sind und die Vorsatzoptiken (11; 51) um die gemeinsamen Längsachsen (44) um mehrere Winkelgrade versetzt zueinander angeordnet sind.

11. Vorsatzoptikanordnung (41) nach Anspruch 10, **dadurch gekennzeichnet, dass** die Vorsatzoptikanordnung (41) vier Vorsatzoptiken (11; 51) umfasst, die jeweils um die gemeinsamen Längsachsen (44) um 45° versetzt zueinander angeordnet sind.

## Claims

1. An optical attachment (11; 51) made of a transparent material for focusing light from a light source (18), the optical attachment (11; 51) having a light entry surface (12), via which light emitted by the light source (18) enters the optical attachment (11; 51), and a light exit surface (13, 43), and the optical attachment (11; 51) has a longitudinal axis (16) which runs through the light entry surface (12) and the light exit surface (13, 43, 53) and on which the light source (18) is arranged at a first focal point (17), the light entry surface (12) being subdivided into a first central region (14) and a second region (15) arranged next to the first region (14), the second region (15) being formed in such a way, that light rays emitted by the light source (18) intersect in a virtual second focal point (20) after passing through the second region (15) and refracting at the second region (15), and that the first central region (14) is so formed, that light rays emitted by the light source (18) intersect at a virtual third focal point (23) after passing through the first region (14) and refracting at the first region (14), **characterized in that** light bundled by the light exit surface (13, 43, 53) exits the attachment optics (11; 51), **in that** the attachment optic (11; 51) has a plate-shaped extension and **in that** the second focal point (20) is arranged between the first focal point (17) and the third focal point (23).

2. Optical attachment (11; 51) according to claim 1, **characterized in that** the first central region (14) and the second region (15) are each curved symmetrically with respect to the longitudinal axis (16).

3. Optical attachment (11; 51) according to claim 2, **characterized in that** the second focal point (20) and the third focal point (23) are arranged on the longitudinal axis (16) of the attachment optics (11; 51).

4. Optical attachment (11; 51) according to one of claims 1 to 3, **characterized in that** the first central region (14) is convexly curved.

5. Optical attachment (11; 51) according to one of claims 1 to 4, **characterized in that** the second region (15) is concave curved.

6. Optical attachment (11; 51) according to one of claims 1 to 5, **characterized in that** the longitudinal axis (16) is an optical axis of the attachment optics (11; 51).

7. Optical attachment (11; 51) according to one of claims 1 to 6, **characterized in that** two opposite narrow sides (38) of the plate-shaped attachment optic (11; 51) formed between the light entry surface (12) and the light exit surface (13, 43, 53) are parabolic in shape in a longitudinal section along the longitudinal axis (16) and parallel to a surface extension of the optical attachment (11; 51), the longitudinal axis (16) forming a parabolic axis of the two parabolic narrow sides (38).

8. Optical attachment (11; 51; 61; 71) according to one of claims 1 to 7, **characterized in that** the light-emitting surface (13, 43, 53) has a wave structure at least in one plane.

9. Optical attachment (11; 51) according to claim 8, **characterized in that** the light-emitting surface (13, 43, 53) has wave structures which overlap in two planes which are perpendicular to one another.

10. Optical attachment arrangement (41) comprising a plurality of optical attachments (11; 51) according to one of the preceding claims, the longitudinal axes (16) of the optical attachments (11; 51) being congruent and the optical attachments (11; 51) being arranged offset relative to one another by a plurality of degrees of angle about the common longitudinal axes (44).

11. Optical attachment arrangement (41) according to Claim 10, **characterized in that** the optical attachments arrangement (41) comprises four optical attachments (11; 51) which are arranged offset by 45° relative to one another about the common longitudinal axes (44) in each case.

## Revendications

1. Optique auxiliaire (11; 51) en matériau transparent destinée à focaliser de la lumière d'une source lumineuse (18), dans laquelle l'optique auxiliaire (11; 51) présente une surface d'entrée de lumière (12), par laquelle de la lumière émise par la source lumineuse (18) pénètre dans l'optique auxiliaire (11; 51), et une surface de sortie de lumière (13, 43, 53), et l'optique auxiliaire (11; 51) présente un axe longitudinal (16) qui s'étend par la surface d'entrée de lumière (12) et la surface de sortie de lumière (13, 43, 53) et sur laquelle est disposée la source lumineuse (18) dans un premier foyer (17), la surface d'entrée de lumière (12) étant subdivisée en une première zone (14) centrale et une deuxième zone (15) disposée à côté de la première zone (14), la deuxième zone (15) étant conçue de façon telle que des rayons lumineux émis par la source lumineuse (18) se coupent, après un passage par la deuxième zone (15) et une réfraction par la deuxième zone (15), dans un deuxième foyer (20) virtuel, et que la première zone (14) centrale est conçue de façon telle que les rayons lumineux émis par la source lumineuse (18) se coupent après un passage par la première zone (14) et une réfraction par la première zone (14), en un troisième foyer (23) virtuel, **caractérisé en ce que** de la lumière concentrée par la surface de sortie de lumière (13, 43, 53) sort de l'optique auxiliaire (11; 51), **en ce que** l'optique auxiliaire (11; 51) présente une extension en forme de plaque, et **en ce que** le second foyer (20) est disposé entre le premier foyer (17) et le troisième foyer (23).

2. Optique auxiliaire (11; 51) selon la revendication 1, **caractérisée en ce que** la première zone centrale (14) et la deuxième zone (15) sont respectivement bombées de façon symétrique par rapport à l'axe longitudinal (16) .

3. Optique auxiliaire (11; 51) selon la revendication 2, **caractérisée en ce que** le deuxième foyer (20) et le troisième foyer (23) sont disposés sur l'axe longitudinal (16) de l'optique auxiliaire (11; 51).

4. Optique auxiliaire (11; 51) selon l'une des revendications 1 à 3, **caractérisée en ce que** la première zone centrale (14) est bombée de façon convexe.

5. Optique auxiliaire (11; 51) selon l'une des revendications 1 à 4, **caractérisée en ce que** la deuxième zone (15) est bombée de façon concave.

6. Optique auxiliaire (11; 51) selon l'une des revendications 1 à 5, **caractérisée en ce que** l'axe longitudinal (16) est un axe optique de l'optique auxiliaire (11; 51).

7. Optique auxiliaire (11; 51) selon l'une des revendications 1 à 6, **caractérisée en ce que** deux côtés étroits (38) opposés de l'optique auxiliaire (11; 51) en forme de plaque, formés entre la surface d'entrée de lumière (12) et la surface de sortie de lumière (13, 43, 53), sont réalisés en forme de parabole, vue en une coupe longitudinale le long de l'axe longitudinal (16) et parallèlement à une étendue de surface de l'optique auxiliaire (11; 51), l'axe longitudinal (16) formant un axe parabolique des deux côtés étroits en forme de parabole (38).

8. Optique auxiliaire (11; 51) selon l'une des revendications 1 à 7, **caractérisée en ce que** la surface de sortie de lumière (13, 43, 53) présente, au moins dans un plan, une structure d'ondes.

9. Optique auxiliaire (11; 51) selon la revendication 8, **caractérisée en ce que** la surface de sortie de lumière (13, 43, 53) présente des structures d'ondes qui se chevauchent dans deux plans perpendiculaires l'un à l'autre.

10. Agencement d'optiques auxiliaires (41) comportant plusieurs optiques auxiliaires (11; 51) selon l'une des revendications précédentes, dans lequel les axes longitudinaux (16) des optiques auxiliaires (11; 51) coïncident et les optiques auxiliaires (11; 51) sont disposées autour des axes longitudinaux communs (44) de façon décalée de plusieurs degrés angulaires les unes par rapport aux autres.

11. Agencement d'optiques auxiliaires (41) selon la revendication 10, **caractérisé en ce que** l'agencement d'optiques auxiliaires (41) comporte quatre optiques auxiliaires (11; 51) qui sont disposées autour des axes longitudinaux communs (44) de façon décalée les unes par rapport aux autres de 45° respectivement.
